# EUROPÄISCHE PATENTSCHRIFT

(11) **EP 1 625 298 B1**
(45) Veröffentlichungstag und Bekanntmachung des Hinweises auf die Patenterteilung: **29.10.2008**
(21) Anmeldenummer: 03757675.8
(22) Anmeldetag: 22.09.2003
(51) Int. Cl.: F02M 31/20, F28D 9/00

(54) **KRAFTFAHRZEUG UND KRAFTSTOFFKÜHLER MIT LAMELLENARTIGEN INNENSTRUKTUREN ZUM ANSCHLUSS AN DIE KLIMAANLAGE**
FUEL AND FUEL COOLER WITH LAMELLAR INNER STRUCTURES FOR CONNECTING TO THE AIR-CONDITIONING SYSTEM
AUTOMOBILE ET REFROIDISSEUR DE CARBURANT A STRUCTURES INTERIEURES LAMELLAIRES, A RACCORDER AU SYSTEME DE CLIMATISATION

(30) Priorität: 10.05.2003 DE 10321065
(43) Veröffentlichungstag der Anmeldung: 15.02.2006
(73) Patentinhaber: Väth, Wolfgang, 63768 Hösbach (DE)
(72) Erfinder: VÄTH, Wolfgang, 63768 Hösbach (DE)
(74) Vertreter: Pöhner, Wilfried Anton, Dr.
(86) Internationale Anmeldenummer: PCT/DE2003/003128
(87) Internationale Veröffentlichungsnummer: WO 2004/104401

(56) Entgegenhaltungen:
- EP-A- 1 072 783
- DE-A- 10 001 434
- US-A- 4 335 782
- US-A- 5 121 790
- US-A- 5 251 603
- US-A- 6 026 894

## Beschreibung

Die Erfindung betrifft ein Kraftfahrzeug mit Verbrennungsmotor, Kraftstofftank und Klimaanlage, sowie einem an die Kraftstoffleitung angeschlossenen Wärmeaustauscher, der zugleich in den Kühlmittelkreislauf der Klimaanlage integriert ist, wobei der Kraftstoffkühler aus einem äußeren Gehäuse mit Anschlüssen für Zuleitung und Ableitung, sowie einer im Inneren des äußeren Gehäuses liegenden Leitung besteht.

Die Erwärmung des Kraftstoffs in einem Kraftfahrzeug kann verschiedene Gründe haben. Zum einen wird der sich im Tank befindliche Kraftstoff durch Sonneneinstrahlung erwärmt, zum anderen wird die Erwärmung des Kraftstoffs in den Tankleitungen durch die Strahlungshitze aus Antriebsteilen und die Strahlungshitze aus der Abgasanlage verursacht. Durch die Erhitzung des Kraftstoffs kann es im Kraftstoff zur Bildung von Dampfblasen kommen, die den ruhigen Lauf des Motors unterbrechen. Im Fachwort werden diese Aussetzer als (engl.) "misfire" bezeichnet. Dieses Problem tritt insbesondere bei hohen Geschwindigkeiten und bei Kompressor- und Turbomotoren mit hohem Verbrauch auf. Aus diesem Grund wurde schon früh an der Entwicklung von Vorrichtungen zum Kühlen von Kraftstoff gearbeitet. Die Vielzahl der Patent- und Offenlegungsschriften, die Kraftstoffkühler beschreiben, zeigt dies.

Die genauere Betrachtung der Dokumente, die sich mit dem Inneren Aufbau des Kraftstoffkühlers beschäftigen zeigt, dass es sich bei diesen Vorrichtungen meist um Verbesserungserfindungen zur Verstärkung der Kühlwirkung handelt, die im wesentlichen durch die Größe der Wärmeübertragungsfläche und durch die Verteilung des Kühlmittels bestimmt wird. Deshalb wurde bei den zum größten Teil als Flüssigkeit-Wärmeaustauscher konzipierten Vorrichtungen durch Konstruktionsänderungen wiederholt die Wärmeübertragungsfläche vergrößert und die Kühlmittelverteilung verbessert. Bei den Bemühungen zur Verbesserung der Kühlmittelverteilung ist eine möglichst homogene Umspülung der kraftstoffführenden Leitungen mit Kühlmittel das Ziel. Die wesentlichen zum Stand der Technik zu zählenden Dokumente werden im folgenden kurz zusammengefasst.

Bei der in DE 34 40 060 beschriebenen Vorrichtung handelt es sich um einen Kraftstoffkühler bei dem der zu kühlende Kraftstoff in einem Wellschlauch, der die Form einer Wendel hat, geführt wird. Der Wellschlauch ist dabei radial an der Innenwand des Kühlergehäuses abgestützt, während das zylindrische Gehäuse in axialer Richtung von Kühlmittel durchströmt wird. Wegen Platzmangel und Biegeproblemen ist die Wendel bei dieser Vorrichtung aus 5 verschiedenen Einzelstücken hergestellt. Neben der geringen Kühlleistung ist bei dieser Vorrichtung vor allem der aufwendige Herstellungsprozeß der Wendel nachteilig:

In Dokument DE 41 10 264 A1 wird ein Vorschlag zur Erhöhung der Kühlleistung der in DE 34 40 060 A1 beschriebenen Vorrichtung gemacht: Um dem Effekt entgegenzutreten, dass die Kühlleistung bei erhöhtem Kühlmitteldurchsatz konstant bleibt oder sogar sinkt, wurde der lichte Kernquerschnitt der kraftstoffführenden Wendel durch einen Anströmkörper ausgefüllt. Der Anströmkörper wurde in diesem Fall als Drallblech gestaltet, das sich zwischen zwei benachbarte Windungen der Wellschlauch-Wendel einsetzen lässt. Die Konturen dieses Drallblechs bestimmen den durch die Wendel innerhalb des Gehäuses belassenen Strömungsquerschnitt neu und führen zu einer homogeneren Umspülung der kraftstoffführenden Wendel.

In Dokument DE 37 40 811 A1 wird statt der bisherigen zylindrischen Grundform des Kraftstoffkühlers ein kalottenförmiges Gehäuse vorgeschlagen, in das eine von dem zu kühlenden Kraftstoff durchströmte Spirale so eingebracht wird, dass deren Windungen quer zum Kühlmittelstrom orientiert sind. Dadurch wird die Strömung des Kühlmittels an jeder Windung neuen thermischen Anlaufvorgängen unterworfen, was zu turbulenten Strömungen führt, die eine gute Umspülung der kraftstoffführenden Leitungen gewährleisten.

In Dokument DE 44 37 167 A1 ist schließlich ein Kraftstoffkühler beschrieben, der eine deutlich vergrößerte Wärmeübertragungsfläche aufweist. Bei dieser Vorrichtung wird ein zylindrischer Balg als wesentlicher Bestandteil des Kraftstoffkühlers zwischen den Enden einer kühlmittelzuführenden Leitung und einer kühlmittelabführenden Leitung angeordnet. Der Kraftstoffkühler weist ein Gehäuse auf, das aus einem Hohlzylinderabschnitt mit Benzinzuleitung und Benzinableitung, sowie einer seitlichen Berandung besteht. Im Gehäusemantel sitzt unter Bildung eines radialen Abstandes ein ringgewellter Balg, der spielfrei auf einem hohlzylindrischen Leitkörper von gleicher Länge befestigt ist.

Der Leitkörper weist im Strömungsquerschnitt eine zur Strömungsrichtung des Kühlmittels geneigt angeordnete ebene Wand auf, die sich über die gesamte Länge des Leitkörpers erstreckt und mit ihrem, bezogen auf die Strömungsrichtung des Kühlmittels, vorderen und hinteren Ende mit dem benachbarten Ende des Leitkörpers einstückig verbunden ist. Auf beiden Seiten der Wand sind im hohlzylindrischen Mantel des Leitkörpers Öffnungen vorgesehen, die einander diametral gegenüber liegen. Die sich längs einer achsparallelen Mantellinie des Leitkörpers erstreckenden Öffnungen münden auf der Außenseite des Leitkörpers in den nach innen offenen Flanken der rundumlaufenden Balgwellen, während in den nach außen offenen Flanken der Balgwellen in gegenläufige Richtung Kraftstoff geführt wird. Durch die zur Strömungsrichtung des Kühlmittels geneigt angeordnete Wand, die eine eliptische Außenkontur aufweist, wird das Kühlmittel ständig entlang den nach innen offenen Balgwellen zwangsgeführt, so dass bei vergrößerter Wärmeübertragungsfläche ein optimaler Wärmeaustausch mit dem auf der anderen Seite der Flanken strömenden Kraftstoff stattfinden kann.

Nachteilig an dieser Vorrichtung ist der komplizierte technische Aufbau und die Notwendigkeit zur exakten Fixierung des Führungskörpers, als wesentliche Voraussetzung für eine korrekte Zuführung von Kraftstoff bzw. Kühlmittel in die einzelnen Balgwellen. Außerdem sind aufgrund des geringen Querschnitts der Balgwellen mit dieser Vorrichtung keine hohen Durchsatzraten möglich.

Auch der Anschluss eines Kraftstoffkühlers an den Kühlmittelkreislauf der Klimaanlage gehört bereits zum Stand der Technik: Dokument DE 37 25 664 A1 beschreibt den Einbau eines in seinem inneren Aufbau nicht näher beschriebenen Kraftstoffkühlers in den Kühlmittelkreislauf vor dem Verdampfer, während Dokument DE 33 30 250 A den Einbau eines, im Aufbau ebenfalls nicht genauer beschriebenen Kraftstoffkühlers, zwischen Verdampfer und Kompressor vorsieht.

Dokument US 4 335 782 A offenbart ausführlich ein Flüssigkeitkühler mit einer im Inneren des äußeren Gehäuses liegenden Leitung, die zu einer Zelle aufgeweitet ist und mit diese Zelle mit nicht parallel zur Strömungsrichtung ausgerichteten Lamellen beaufschlagt ist. Die Lamellen sind senkrecht zur Strömungsrichtung. Die äußeren Leitungsanschlüsse sind nur schematisch dargestellt und jedenfalls nicht diagonal versetzt.

Der Erfindung als in den angehangenen Ansprüchen liegt das Problem zur Konstruktion eines Kraftstoffkühlers zum Einbau in Kraftfahrzeuge mit Klimaanlage zugrunde, der bei einfacher technischer Konstruktion eine ausreichend große Wärmeaustauschfläche zur Verfügung stellt und eine homogene Verteilung des Kühlmittels gewährleistet, so dass bei hohen Geschwindigkeiten ein entsprechend hoher Kraftstoffdurchsatz gewährleistet ist.

Zur Lösung dieser Aufgabe beschreibt die Erfindung als in den angehangenen Ansprüchen einen Kraftstoffkühler bei dem,
- die im Inneren des äußeren Gehäuses liegende Leitung (3) zu einer Zelle aufgeweitet ist, und
- die durch die Aufweitung der Leitung entstandene Zelle (3) innenseitig mit parallel zur Strömungsrichtung ausgerichteten Lamellen (5) beaufschlagt ist, und
- die beiden Leitungsanschlüsse des äußeren Gehäuses (2a und 2b) diagonal versetzt, in die jeweilige Wand des äußeren Gehäuses (1) auf der Ober- und Unterseite eingelassen sind.

Der Kerngedanke der Erfindung als in den angehangenen Ansprüchen besteht in der Schaffung einer Kontakts fläche zum Wärmeaustausch zwischen Kraftstoff und Kühlmittelflüssigkeit, wobei die an der Kontaktfläche angrenzenden Bereiche so gestaltet sind, dass ein schneller Wärmeaustausch gewährleistet ist. Zu diesem Zweck wurden zwei Gehäuse ineinandergeschachtelt und im Inneren des inneren Gehäuses eine aus querverbundenen Lamellen bestehende Netzwerkstruktur integriert. Die zwischen den in Strömungsrichtung ausgerichteten Lamellen befindlichen Querverbindungen sorgen zum einen für einen schnellen Wärmeaustausch zwischen den einzelnen Lamellen und führen gleichzeitig in den jeweiligen Zwischenräumen zu einer homogenen Durchmischung des Kühlmittels. Die ständige Durchmischung des Kühlmittels ist eine weitere wichtige Voraussetzung für einen schnellen Wärmeaustausch.

Die Vorteile des erfindungsgemäßen Kraftstoffkühlers sind vielfältig. Durch die Kühlung des Kraftstoffs wird die Bildung von Dampfblasen und das Verdampfen von Brennstoffadditiven verhindert. Dies ermöglicht die optimale Verbrennung des Kraftstoffs bei minimaler Schadstofferzeugung. Daraus resultiert ein ruhigerer Leerlauf und insbesondere bei Motoren mit höherem Kraftstoffverbrauch eine höhere Motorenleistung. Die höhere Motorenleistung und die Absenkung des Kraftstoffverbrauchs konnten durch Messungen nachgewiesen werden. Außerdem unterstützt der erfindungsgemäße Wärmeaustauscher den störungsfreien Neustart von betriebswarmen Motoren. Weil gekühlter Kraftstoff leichter komprimierbar ist, ist die Wirkung des erfindungsgemäßen Kraftstoffkühlers bei Kompressor- und Turbomotoren am deutlichsten. Die lamellenartigen Strukturen im Inneren des Kraftstoffkühlers beschleunigen den Wärmetransport zu beiden Seiten der Wärmeübertragungsfläche und stabilisieren das äußere Gehäuse sowie die innere Zelle beim Auftreten höherer Drücke.

Für den Einbau des erfindungsgemäßen Kraftstoffkühlers gibt es zwei bevorzugte Ausführungsformen. Das äußere Gehäuse kann zum einen in die Kraftstoffleitung zwischen Kraftstofftank und Kraftstoffpumpe oder aber in den Kühlmittelkreislauf der Klimaanlage integriert werden. Wird die erste Möglichkeit gewählt, d.h. Einbau des äußeren Gehäuses in die Kraftstoffleitung, dann wird die innere Zelle in den Kühlmittelkreislauf der Klimaanlage integriert. Als zweite bevorzugte Ausführungsform ist denkbar, dass die innere Zelle in die Kraftstoffleitung integriert wird und das äußere Gehäuse an den Kühlmittelkreislauf der Klimaanlage angeschlossen wird. (Bei den bisher in der Praxis durchgeführten Testmessungen wurde die erste bevorzugte Ausführungsform gewählt, d.h. das äußere Gehäuse wurde in die Kraftstoffleitung zwischen Kraftstofftank und Kraftstoffpumpe integriert, während die innere Zelle an den Kühlmittelkreislauf der Klimaanlage angeschlossen wurde.)

Gemäß einem weiteren Erfindungsmerkmal kann der Kraftstoffkühler sowohl vor als auch nach dem zur Klimaanlage gehörenden Verdampfer in den Kühlmittelkreislauf integriert werden.

Wird der Kraftstoff nach dem Verdampfer in den Kühlmittelkreislauf integriert, so ergibt sich eine relativ geringe Abkühlung des Kraftstoffs. Die Kühlleistung ist jedoch höher, wenn der Kraftstoffkühler vor dem Verdampfer in den Kühlmittelkreislauf integriert wird.

Es liegt im Rahmen der Erfindung als in den angehangenen Ansprüchen, dass die Strömungsrichtung des Kraftstoffs innerhalb des Kraftstoffkühlers jeweils gegenläufig zur Strömungsrichtung des Kühlmittels ist. Aus der gegenläufigen Führung von Kraftstoff und Kühlmittel resultiert vorteilhafterweise eine erhöhte Kühlleistung.

Es ist ein wesentliches Merkmal der Erfindung, dass die nicht von der inneren Zelle ausgefüllten Bereiche im Inneren des äußeren Gehäuses ebenfalls Lamellen aufweisen, die parallel zur Strömungsrichtung ausgerichtet sind und in einer besonders bevorzugten Ausführungsform genauso wie die Lamellen im Inneren der inneren Zelle durch zusätzliche Querverbindungen zu einer Netzstruktur verknüpft sind. Die Netzstruktur in beiden Hohlkörpern beschleunigt den Wärmetransport zu den weiter von der Grenzfläche entfernt liegenden Lamellen und führt zu einer für den Wärmetransport ebenfalls günstigen Durchwirbelung der Flüssigkeiten und so zu einer homogenen Umspülung der Grenzfläche zu beiden Seiten.

In einer besonders bevorzugten Ausführungsform des erfindungsgemäßen Kraftstoffkühlers ist das äußere Gehäuse und die Zelle im Inneren jeweils aus sechs zueinander senkrecht stehenden Seitenflächen zusammengesetzt. Im zusammengesetzten Kraftstoffkühler kommen die Mittellinien der beiden quaderförmigen Hohlkörper aufeinander zu liegen. Dabei ist die innere Zelle in Längsrichtung kürzer als die äußere Zelle, so dass zwischen beiden Hohlkörpern ein Freiraum bleibt, der im Betriebszustand von Kraftstoff oder Kühlflüssigkeit ausgefüllt wird.

In einer weiteren bevorzugten Ausführungsform des erfindungsgemäßen Kraftstoffkühlers entspricht die äußere Höhe der quaderförmigen inneren Zelle exakt der inneren Höhe des äußeren Gehäuses, so dass die innere Zelle mit der Ober- und Unterseite passgenau ohne Zwischenraum im äußeren Gehäuse befestigt ist. Da die beiden Leitungsanschlüsse des äußeren Gehäuses diagonal versetzt in die jeweilige Wand des äußeren Gehäuses auf der Ober- und Unterseite eingelassen sind, wird die innere Zelle in dieser bevorzugten Ausführungsform im Betriebszustand an mindestens zwei Längsseiten sowie an den beiden Stirnseiten von Kraftstoff oder von Kühlflüssigkeit umspült.

Es entspricht der Lehre der Erfindung als in den angehangenen Ansprüchen, dass die Bestandteile zum Aufbau des äußeren Gehäuses und der inneren Zelle, sowie die Lamellen und die Querverbindungen im Inneren beider Hohlkörper aus einem Metall mit hoher Wärmeleitfähigkeit, wie z. B. Aluminium oder Kupfer, bestehen. Bei Verwendung von Aluminium wird zum Verbinden der Teile das Wolfram-inert-Gasschweißen (Wig-Schweißen) per Nadel angewandt. Auf diese Weise lassen sich auch die Anschlüsse, die unter Berücksichtigung des Durchsatzvolumens verschiedene Größen haben können, sowie die edelstahlummantelten Benzinschläuche, die ebenfalls verschiedene Durchmesser aufweisen können, befestigen. Die verschiedenen Anschlussgrößen werden je nach Fahrzeug und Motorvariante angepasst, so dass für die Motorleistung die bestmöglichen Ergebnisse erreicht werden.

Weitere Einzelheiten und Merkmale der Erfindung lassen sich dem nachfolgenden Beschreibungsteil der Zeichnung entnehmen. Die Zeichnung und die dazugehörige Beschreibung soll die Erfindung als in den angehangenen Ansprüchen jedoch nicht einschränken, sondern sie näher erläutern.

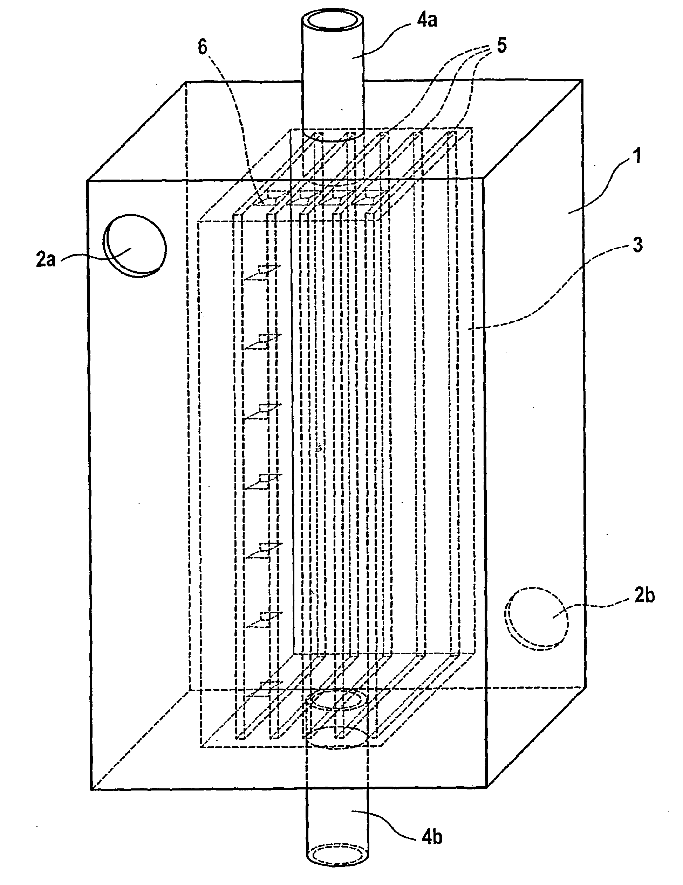

In Figur 1 ist eine von mehreren möglichen Ausführungsformen des erfindungsgemäßen Kraftstoffkühlers gezeigt. Innerhalb des äußeren Gehäuses 1 ist die innere Zelle 3 gelagert. Die zur inneren Zelle gehörenden Anschlüsse 4a und 4b verlassen das äußere Gehäuse 1 an den Stirnseiten. Im Inneren der inneren Zelle sind die in Strömungsrichtung ausgerichteten Lamellen 5 und die nicht komplett dargestellten Querverbindungen 6 zu sehen. Die Querverbindungen bewirken eine durch Mischung der Flüssigkeit beim Durchströmen der Lamellen und unterstützen dadurch den Wärmeaustausch.

Die Anschlüsse des äußeren Gehäuses 2a und 2b liegen diagonal versetzt auf den beiden Seitenflächen des äußeren Gehäuses 1. Im gezeigten Beispiel ist der von der inneren Zelle 3 nicht ausgefüllte Raum im Inneren des äußeren Gehäuses 1 nicht durch Lamellen und entsprechende Querverbindungen ausgefüllt. Natürlich ist auch eine Ausführungsform denkbar, bei der dieser Freiraum ebenfalls mit Lamellen und Querverbindungen, wie für die innere Zelle 3 gezeigt, ausgefüllt ist.

## Patentansprüche

1. Kraftfahrzeug mit Verbrennungsmotor, Kraftstofftank und Klimaanlage, sowie einem an die Kraftstoffleitung angeschlossenen Wärmeaustauscher, der zugleich in den Kühlmittelkreislauf der Klimaanlage integriert ist, wobei der Kraftstoffkühler aus einem äußeren Gehäuse (1) mit Anschlüssen für Zuleitung (2a) und Ableitung (2b), sowie einer im Inneren des äußeren Gehäuses liegenden Leitung (3) besteht, **dadurch gekennzeichnet, dass**
- die im Inneren des äußeren Gehäuses liegende Leitung (3) zu einer Zelle aufgeweitet ist, und
- die durch die Aufweitung der Leitung entstandene Zelle (3) innenseitig mit parallel zur Strömungsrichtung ausgerichteten Lamellen (5) beaufschlagt ist, und
- die beiden Leitungsanschlüsse des äußeren Gehäuses (2a und 2b) diagonal versetzt, in die jeweilige Wand des äußeren Gehäuses (1) auf der Ober- und Unterseite eingelassen sind.

2. Kraftstoffkühler nach Anspruch 1, **dadurch gekennzeichnet, dass** das äussere Gehäuse (1) in die Kraftstoffleitung zwischen Kraftstofftank und Kraftstoffpumpe oder in den Kühlmittelkreislauf der Klimaanlage integrierbar ist.

3. Kraftstoffkühler nach Anspruch 1, **dadurch gekennzeichnet, dass** die innere Zelle (3) in den Kühlmittelkreislauf der Klimaanlage oder in die Kraftstoffleitung zwischen Kraftstofftank und Kraftstoffpumpe integrierbar ist.

4. Kraftstoffkühler nach einem der vorgenannten Ansprüche, **dadurch gekennzeichnet, dass** das äussere Gehäuse (1) in die Kraftstoffleitung integriert ist und die innere Zelle (3) in den Kühlmittelkreislauf integriert ist.

5. Kraftstoffkühler nach einem der vorhergehenden Ansprüche, **dadurch gekennzeichnet, dass** der jeweils an den Kühlmittelkreislauf angeschlossene Hohlkörper (1) oder (3) des Kraftstoffkühlers vor oder nach dem zur Klimaanlage gehörenden Verdampfer in den Kühlmittelkreislauf der Klimaanlage integrierbar ist.

6. Kraftstoffkühler nach einem der vorgenannten Ansprüche, **dadurch gekennzeichnet, dass** innerhalb des Kraftstoffkühlers die Strömungsrichtung des Kraftstoffs jeweils gegenläufig zur Strömungsrichtung des Kühlmittels ist.

7. Kraftstoffkühler nach Anspruch 1, **dadurch gekennzeichnet, dass** die nicht von der inneren Zelle (3) ausgefüllten Bereiche im Inneren des äußeren Gehäuses (1) Lamellen (5) aufweisen, die parallel zur Strömungsrichtung ausgerichtet sind.

8. Kraftstoffkühler nach Anspruch 1, 6 und 7, **dadurch gekennzeichnet, dass** die im äußeren Gehäuse (1) und die in der inneren Zelle (3) befestigten Lamellen (5) mit zusätzlichen Querverbindungen (6) eine jeweils eigenständige Netzstruktur bilden.

9. Kraftstoffkühler nach einem der Ansprüche 1, 6 bis 8, **dadurch gekennzeichnet, dass** das äussere Gehäuse (1) und die zur Zelle (3) aufgeweitete Leitung im Inneren des äußeren Gehäuses (1) jeweils aus sechs zueinander senkrecht stehenden Seitenflächen bestehen.

10. Kraftstoffkühler nach einem der Ansprüche 1 und 6 bis 9, **dadurch gekennzeichnet, dass** bei quaderförmigem Aufbau des äußeren Gehäuses (1) und bei quaderförmigem Aufbau der inneren Zelle (3) die Mittellinien beider Körper aufeinander zu liegen kommen.

11. Kraftstoffkühler nach einem der Ansprüche 1 und 6 bis 10, **dadurch gekennzeichnet, dass** die beiden Leitungsanschlüsse des äußeren Gehäuses (2a) und (2b), diagonal versetzt, in die jeweilige Wand des äußeren Gehäuses (1) auf der Ober- und Unterseite eingelassen sind.

12. Kraftstoffkühler nach einem der Ansprüche 1 und 6 bis 11, **dadurch gekennzeichnet, dass** die innere Zelle (3) im Betriebszustand an mindestens zwei Längsseiten, sowie an den beiden Stirnseiten vom Kraftstoff oder von der Kühlflüssigkeit umgeben ist.

13. Kraftstoffkühler nach einem der Ansprüche 1 und 6 bis 12, **dadurch gekennzeichnet, dass** die beiden Leitungsanschlüsse (4a) und (4b) der im Inneren des äußeren Gehäuses (1) liegenden Zelle (3), diagonal versetzt, in die Wand auf der Ober- und Unterseite des äußeren Gehäuses (1) eingelassen sind.

14. Kraftstoffkühler nach einem der Ansprüche 1 und 6 bis 13, **dadurch gekennzeichnet, dass** die Bestandteile zum Aufbau des äußeren Gehäuses (1) und der inneren Zelle (3) aus einem Metall mit hoher Wärmeleitfähigkeit bestehen.

15. Kraftstoffkühler nach einem der Ansprüche 1 und 6 bis 14, **dadurch gekennzeichnet, dass** die Lamellen (5) und die Querverbindungen (6) im Inneren des äußeren Gehäuses (1) aus einem Metall mit hoher Wärmeleitfähigkeit bestehen.

16. Kraftstoffkühler nach einem der Ansprüche 1 und 6 bis 15, **dadurch gekennzeichnet, dass** die Lamellen (5) und die Querverbindungen (6) im Inneren der inneren Zelle (3) aus einem Metall mit hoher Wärmeleitfähigkeit bestehen.

## Claims

1. Motor vehicle comprising a combustion engine, fuel tank and air-conditioning system, and a heat exchanger, which is connected to the fuel line and also integrated in the coolant circuit of the air-conditioning system, the fuel cooler consisting of an outer housing (1), with connections for feed line (2a) and drain line (2b) and a line (3) located in the interior of the external housing,
**characterised in that**
- the line (3) located in the interior of the exterior housing is widened to form a cell, and
- the cell (3) produced by the widening of the line is acted on on the inside by lamellae (5), which are oriented parallel to the flow direction, and
- the two line connections of the outer housing (2a and 2b) are inset, diagonally offset, into the respective wall of the outer housing (1) on the top and bottom sides.

2. Fuel cooler according to claim 1, **characterised in that** the outer housing (1) can be integrated into the fuel line between the fuel tank and fuel pump or into the coolant circuit of the air-conditioning system.

3. Fuel cooler according to claim 1, **characterised in that** the inner cell (3) can be integrated into the coolant circuit of the air-conditioning system or into the fuel line between the fuel tank and fuel pump.

4. Fuel cooler according to one of the preceding claims, **characterised in that** the outer housing (1) is integrated in the fuel line, and the inner cell (3) is integrated in the coolant circuit.

5. Fuel cooler according to one of the preceding claims, **characterised in that** the hollow bodies (1) or (3) of the fuel cooler, which are in each case connected to the coolant circuit, can be integrated in the air-conditioning system before or after the evaporator, which belongs to the air-conditioning system.

6. Fuel cooler according to one of the preceding claims, **characterised in that** the flow direction of the fuel within the fuel cooler is in each case counter to the flow direction of the coolant.

7. Fuel cooler according to claim 1, **characterised in that** the regions that are not filled by the inner cell (3) in the interior of the outer housing (1) have lamellae (5), which are oriented parallel to the flow direction.

8. Fuel cooler according to claims 1, 6 and 7, **characterised in that** the lamellae (5) fixed in the outer housing (1) and the lamellae (5) fixed in the inner cell (3), with additional cross-connections (6), in each case form an independent network structure.

9. Fuel cooler according to claims 1 and 6 to 8, **characterised in that** the outer housing (1) and the line, which is widened to form the cell (3), in the interior of the outer housing (1) each consist of six side surfaces which are in each case perpendicular to one another.

10. Fuel cooler according to claims 1 and 6 to 9, **characterised in that**, in the case where the outer housing (1) has a regular parallelepipedal structure and in the case where the inner cell (3) has a regular parallelepipedal structure, the centre lines of the two bodies come to lie opposite one another.

11. Fuel cooler according to claims 1 and 6 to 10, **characterised in that** the two line connections of the outer housing (2a) and (2b) are inset, diagonally offset, into the respective wall on the upper and lower side of the outer housing (1).

12. Fuel cooler according to one of claims 1 and 6 to 11, **characterised in that**, in the operating state, the inner cell (3) is surrounded, at at least two longitudinal sides and at the two end faces, by fuel or by coolant

13. Fuel cooler according to claims 1 and 6 to 12, **characterised in that** the two line connections (4a) and (4b) of the cell(3), which lies in the interior of the outer housing (1), are inset, diagonally offset, into the respective wall on the upper and lower side of the outer housing (1).

14. Fuel cooler according to claims 1 and 6 to 13, **characterised in that** the components for constructing the outer housing (1) and the inner cell (3) consist of a metal with high thermal conductivity.

15. Fuel cooler according to claims 1 and 6 to 14, **characterised in that** the lamellae (5) and the cross-connections (6) in the interior of the outer housing (1) consist of a metal with high thermal conductivity.

16. Fuel cooler according to claims 1 and 6 to 15, **characterised in that** the lamellae (5) and the cross-connections (6) in the interior of the inner cell (3) consist of a metal with high thermal conductivity.

## Revendications

1. Véhicule possédant un moteur à combustion, un réservoir de carburant et une installation de climatisation, ainsi qu'un échangeur de chaleur raccordé à la conduite de carburant, qui est simultanément intégré dans le circuit du réfrigérant de l'installation de climatisation, sachant que le réfrigérateur de carburant est composé d'un boîtier extérieur (1) avec des raccordements pour la conduite d'alimentation (2a) et la conduite d'évacuation (2b), ainsi qu'une conduite (3) se trouvant à l'intérieur du boîtier extérieur, **caractérisé par le fait que**
• la conduite (3) se trouvant à l'intérieur du boîtier extérieur est élargie de manière à former une cellule, et
• que la cellule (3) apparue à la suite de l'élargissement de la conduite est injectée à l'intérieur par des lamelles (5) dirigée parallèlement à la direction du flux, et
• que les deux raccordements de conduite du boîtier extérieur (2a et 2b) sont décalés dans le sens diagonal et sont introduits dans les parois respectives du boîtier extérieur (1) sur la face supérieure et la face inférieure.

2. Refroidisseur de carburant conforme à la revendication 1, **caractérisé par le fait que** le boîtier extérieur (1) peut être intégré dans la conduite de carburant entre le réservoir de carburant et la pompe de carburant ou dans le circuit du réfrigérant de l'installation de climatisation

3. Refroidisseur de carburant conforme à la revendication 1, **caractérisé par le fait que** la cellule intérieure (3) peut être intégrée dans le circuit du réfrigérant de l'installation de climatisation ou dans la conduite de carburant entre le réservoir de carburant et la pompe de carburant

4. Refroidisseur de carburant conforme à l'une des revendications précédentes, **caractérisé par le fait que** le boîtier extérieur (1) est intégré dans la conduite de carburant et que la cellule intérieure (3) est intégrée dans le circuit du réfrigérant.

5. Refroidisseur de carburant conforme à l'une des revendications précédentes, **caractérisé par le fait que** le corps creux (1) ou (3) du refroidisseur de carburant raccordé au circuit du réfrigérant peut être intégré dans le circuit du réfrigérant, avant ou après l'évaporateur faisant partie de l'installation de climatisation.

6. Refroidisseur de carburant conforme à l'une des revendications précédentes, **caractérisé par le fait qu'**à l'intérieur du refroidisseur de carburant, la direction du flux du carburant est dans chaque cas opposé à la direction du flux du réfrigérant.

7. Refroidisseur de carburant conforme à la revendication 1, **caractérisé par le fait que** les zones qui ne sont pas remplies par la cellule intérieure (3) à l'intérieur du boîtier extérieur (1) présentent des lamelles (5) orientées parallèlement à la direction du flux.

8. Refroidisseur de carburant conforme aux revendications 1, 6 et 7, **caractérisé par le fait que** les lamelles (5) fixées dans le boîtier extérieur (1) et dans la cellule intérieure (3) forment à chaque fois une structure en réseau indépendante avec des liaisons transversales supplémentaires (6).

9. Refroidisseur de carburant conforme à l'une des revendications 1, 6 à 8, **caractérisé par le fait que** le boîtier extérieur (1) et la conduite élargie vers la cellule (3) à l'intérieur du boîtier extérieur (1) sont composés dans chaque cas de six surfaces situées à la verticale les unes par rapport aux autres.

10. Refroidisseur de carburant conforme à l'une des revendications 1 et 6 à 9, **caractérisé par le fait que**, le boîtier extérieur (1) ayant une forme de parallélépipède et la cellule intérieure (3) ayant une forme de parallélépipède, les lignes médianes des deux corps viennent à reposer les unes sur les autres.

11. Refroidisseur de carburant conforme à l'une des revendications 1 et 6 à 10, **caractérisé par le fait que** les deux raccordements de conduite du boîtier extérieur (2a) et (2b) sont, décalés dans le sens diagonal, introduits dans les parois respectives du boîtier extérieur (1) sur la face supérieure et la face inférieure.

12. Refroidisseur de carburant conforme à l'une des revendications 1 et 6 à 11, **caractérisé par le fait que** la cellule intérieure (3) en état de service est entourée par le carburant ou par le liquide réfrigérant sur au moins deux côtés longitudinaux, ainsi que sur les deux faces frontales.

13. Refroidisseur de carburant conforme à l'une des revendications 1 et 6 à 12, **caractérisé par le fait que** les deux raccordements de conduite (4a) et (4b) de la cellule (3) se trouvant à l'intérieur du boîtier extérieur (1) sont introduits, décalés dans le sens diagonal, dans la paroi de la face supérieure et la face supérieure du boîtier extérieur 1).

14. Refroidisseur de carburant conforme à l'une des revendications 1 et 6 à 13, **caractérisé par le fait que** les composants destinés à former le boîtier extérieur (1) et de la cellule intérieure (3) sont composés dans un métal ayant une forte conductibilité thermique.

15. Refroidisseur de carburant conforme à l'une des revendications et 6 à 14, **caractérisé par le fait que** les lamelles (5) et les liaisons transversales (6) à l'intérieur du boîtier extérieur (1) sont composées dans un métal ayant une forte conductibilité thermique.

16. Refroidisseur de carburant conforme à l'une des revendications 1 et 6 à 15, **caractérisé par le fait que** les lamelles (5) et les liaisons transversales (6) à l'intérieur de la cellule intérieure (3) sont composées dans un métal ayant une forte conductibilité thermique.
